# EUROPEAN PATENT APPLICATION

(11) **EP 1 092 898 A2**
(43) Date of publication of application: **18.04.2001**
(21) Application number: 00122182.9
(22) Date of filing: 12.10.2000
(51) Int. Cl.: F16J 9/20

(54) **Oil control ring for internal combustion engine with dynamically stabilized side rail**

(30) Priority: 13.10.1999 JP 29082499
(71) Applicant: Riken Corporation, Chiyoda-ku, Tokyo (JP)
(72) Inventor: Miida, Hiroshi, c/o Kashiwazaki off of Riken Corp, Kashiwazaki-shi Niigata-pref, 945-0027 (JP); Katayama, Nobuo, c/o Kashiwazaki off of Riken Corp, Kashiwazaki-shi Niigata-pref, 945-0027 (JP); Murayama,Katsumi,c/o Kashiwazaki off of Riken Corp, Kashiwazaki-shi Niigata-pref, 945-0027 (JP); Usui, Miyuki, c/o Kashiwazaki off of Riken Corp, Kashiwazaki-shi Niigata-pref, 945-0027 (JP)
(74) Representative: Bauer, Friedrich, Dipl.-Ing.

(57) **Abstract**

A oil control ring is provided which comprising an expander 6 and two side rails 4a, 4b mounted thereon. The expander 6 has the ring shape in the plan view with radial waves which include outer arcuate segments 6a, inner arcuate segments 6b, connections 6c which connect the outer and inner arcuate segments 6a, 6b and lugs 7. Each of the outer arcuate segments 6a has upper and lower protrusions 8 for supporting each outer side of the side rails 4a, 4b. The upper protrusions 8 axially extends from the upper end of the outer arcuate segments 6a for contact with said upper side rail 4a, and the lower protrusion 8 axially extending from the lower end of said outer arcuate segment 6a for contact with said lower side rail 4b. A ratio of the total circumferential length of the protrusions 8 to the whole circumferential length of the side rail 4a, 4b is equal to or more than 20%, preferably 25% to shorten the distance between adjoining protrusions 8 and thereby lengthen the arcuate length of the protrusions 8 to an extent effective to prevent vertical deformation or vibration of the side rail 4a, 4b.

## Description

### Technical Field

This invention relates to an oil control ring for internal combustion engine, in particular of the type capable of reducing vibration of a side rail provided in the oil control ring during operation of the engine.

### BACKGROUND ART

For example, a Japanese Utility Model Disclosure No. 59-107952 indicates a prior art oil control ring attached in an annular groove formed in a piston for internal combustion engine. The oil control ring comprises a spacer expander and two side rails mounted on the spacer expander in spaced and parallel relation to each other. The spacer expander resiliently pushes the side rails toward an inner wall of a cylinder in the engine. This oil control ring has its central circumferential portion of its thickness thinner than those of the outer and inner circumferential portions. The oil control ring of this type is called as "combined three piece type" which comprises a spacer expander and two side rails.

Japanese Utility Model Disclosure No. 1-158545 shows a combined three piece type oil control ring which comprises a spacer expander and two side rails disposed on the upper and bottom sides of the spacer expander. The spacer expander has a plurality of lugs formed at angular intervals in contact with the side rails so that the lugs elastically push the side rails toward an inner wall of a cylinder in engine and also push them toward radial surfaces of an annular groove for receiving the oil control ring. A plurality of small protrusions are formed at angular intervals in the outer segments of the spacer expander to support the outer portion of each side rails.

Also, Japanese Utility Model Publication No. 5-5327 demonstrates a oil ring of the combined three piece type which comprises a pair of side rails and a spacer expander for keeping the side rails in a spaced relation to each other. The spacer expander has a plurality of lugs provided at regularly angular intervals so that the lugs are in contact with the side rails to push them in the radial and axial directions.

In this way, side rails in prior art oil control rings are supported by a spacer expander which includes lugs for pushing the side rails toward an inner surface of a cylinder bore and protrusions for keeping the side rails in a spaced relation to each other.

Although prior art oil control rings have a plurality of protrusions in angular intervals to support the outer portions of the side rails, the protrusions do not have their circular length enough to surely support the side rails during operation of the internal combustion engine. In fact, a rate of the total circumferential length in the protrusions to the whole circumference of the side rail is less than 20% so that the protrusions cannot stably support the side rails against the axial deformation or vertical vibration of the side rails resulted from the frictional force between the side rails and the inner surface of the cylinder bore. The inventors of this invention believe that the vibration of the side rail might be caused by the vertical deformation of the side rail due to weak backing or support by the protrusions. The vibration of the side rails causes an increased consumption of lubricating oil and abnormal noise of the engine.

An object of the present invention is to provide an oil control ring capable of reducing deformation and vibration of a side rail during operation of the engine.

### DISCLOSURE OF INVENTION

The oil control ring according to the present invention comprises an expander (6) having the ring shape in the plan view with radial waves and two side rails (4a, 4b) mounted on the expander (6). The expander (6) includes outer arcuate segments (6a), inner arcuate segments (6b), connections (6c) which connect the outer and inner arcuate segments (6a, 6b) and lugs (7) formed in the inner arcuate segments (6b) in contact with the side rails (4a, 4b) to elastically push the side rails (4a, 4b) toward an inner wall (13) of a cylinder (3). Each of the outer arcuate segments (6a) has upper and lower protrusions (8) for supporting each outer side of the side rails (4a, 4b). The upper protrusion (8) axially extends from the upper end of the outer arcuate segment (6a) for contact with the upper side rail (4a), and the lower protrusion (8) axially extends from the lower end of the outer arcuate segment (6a) for contact with the lower side rail (4b). A ratio of the total circumferential length of the protrusions (8) to the whole circumferential length of the side rail (4a, 4b) is equal to or more than 20%, preferably equal to or more than 25% to shorten the distance between adjoining protrusions (8), and adversely lengthen the arcuate length of the protrusions (8) to an extent effective to prevent or reduce vertical deformation or vibration of the side rail (4a, 4b). In other words, the longer circumferential length of the protrusions (8) assures to reduce the deformation and vibration of the side rail (4a, 4b) and the noise accordingly during operation.

The side rails (4a, 4b) comprise an upper side rail (4a) and an lower side rail (4b) attached to the expander (6) in spaced and parallel relation to each other. Each end of the outer arcuate segments (6a) is alternately connected to each end of the inner arcuate segments (6b) adjacent to the outer arcuate segment (6a) through the connection (6c). The protrusion (8) is formed along the substantially entire length of the outer arcuate segment (6a) to extend to a bent portion (6d) formed between the outer arcuate segment (6a) and the connection (6c). The protrusion (8) has its circumferential length substantially equal to or longer than the circumferential length of the lug (7).

### BRIEF DESCRIPTION OF THE DRAWINGS

A more complete understanding of the present invention may be derived by reference to the detailed description and the claim when considered together with the accompanying drawings wherein:
FIG. 1 is a sectional view of the preferred embodiment of the oil control ring according to the present invention.
FIG. 2 is a plan view of FIG. 1.
FIG. 3 is a graph showing change in deformed amount of a side rail relative to variation in ratio of the total circumferential length of the protrusions to the whole circumferential length of the side rail.

### BEST MODE FOR CARRYING OUT THE INVENTION

Embodiments of the present invention will be described hereinafter in connection with the accompanied drawings.

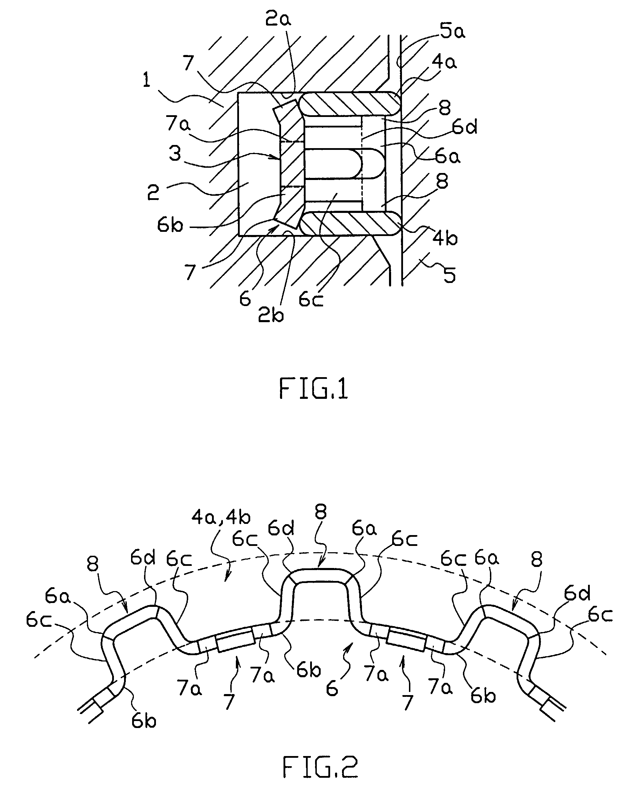

As understood from FIG. 1 and FIG. 2, attached in an annular groove 2 formed in a piston 1 for internal combustion engine is the oil control ring 3 according to the present invention which comprises an expander 6 and a pair of upper and lower side rails 4a, 4b disposed in spaced and substantially parallel relation to each other on and under the expander 6. The upper and lower side rails 4a, 4b made of stainless steel are elastically pushed toward an inner wall 5a of a cylinder 5 by a spring force of the expander 6 made of steel.

The expander 6 comprises a plurality of outer arcuate segments 6a positioned along an outer base circle of the expander 6; a plurality of inner arcuate segments 6b positioned along an inner base circle of the expander 6 alternately between the adjacent outer arcuate segments 6a; and a plurality of connections 6c which connect the adjacent outer and inner arcuate segments 6a, 6b to form a ring shape in the plan view with radial waves. Accordingly, each end of the outer arcuate segments 6a is alternately connected to each end of the inner arcuate segments 6b adjacent to the outer arcuate segment 6a through the connection 6c.

The expander 6 further comprises lugs 7 each formed in the inner arcuate segment 6b in contact with each inner edge of the side rails 4a, 4b to elastically push them in the radial and outward direction; and protrusions 8 each formed in the outer arcuate segment 6a in contact with each outer portion of the side rails 4a, 4b to support them in a spaced relation to each other. The lugs 7 are provided to vertically extend from the top and bottom edges of the inner arcuate segments 6b with an inclination angle less than 30 degrees, for example at an angle of 15 degrees relative to a central axis of the piston 1 to push the side rails 4a, 4b in two directions. Specifically, the lugs 7 radially outwardly push each periphery of the side rails 4a, 4b toward the inner surface of the cylinder 5, and simultaneously push the outer main surfaces of the side rails 4a, 4b toward the upper and lower radial surfaces 2a, 2b of the groove 2. Accordingly, each periphery of the side rails 4a, 4b is in contact with the inner surface 5a of the cylinder 5 under a pressure of the predetermined level adequate to scrape lubricating oil from the inner surface of the cylinder 5 by the side rails 4a, 4b down in the oil reservoir. In addition, the outer main surfaces of the side rails 4a, 4b is in line contact or face contact to the upper and lower radial surfaces 2a, 2b of the groove 2. Notches 7a are formed in the inner arcuate segments 6b at both ends of each lug 7 to provide the lug 7 with a desired elasticity due to the adjusted depth of the notches 7a. The protrusions 8 are provided to vertically extend from the top and bottom edges of the outer arcuate segments 6a without inclination and in parallel to the central axis of the piston 1. Accordingly, the protrusions 8, axially formed on the top and bottom edges of the outer arcuate segments 6a, are in alignment with each other to hold the side rails 4a, 4b in position because the outer portions of the upper and lower side rails 4a, 4b are respectively in contact with the upper and lower protrusions 8. The protrusion 8 is formed along the substantially entire length of the outer arcuate segment 6a to extend to a bent portion 6d formed between the outer arcuate segment 6a and the connection 6c so that the protrusion 8 has its circumferential length substantially equal to or longer than the circumferential length of the lug 7.

When the piston 1 does vertical and reciprocating motion, the side rails 4a, 4b vertically move along the inner surface 5a of the cylinder 5 with each periphery of the side rails 4a, 4b pushed toward the inner surface 5a of the cylinder 5 by the lugs 7. During upward movement of the piston 1, the upper side rail 4a moves away from the upper radial surface 2a of the groove 2 due to the frictional force with the inner surface 5a of the cylinder 5 to provide a passage between the upper side rail 4a and upper radial surface 2a. As the upper side rail 4a scrapes lubricating oil from the inner surface 5a of the cylinder 5 during the upward movement, the scraped oil flows through the opened passage between the upper side rail 4a and upper radial surface 2a into the groove 2, and then flows from the groove 2 through an opening (not shown) to the oil reservoir. At this moment, the oil in the groove 2 cannot be returned to the inner surface of the cylinder bore since the lower side rail 4b certainly keeps contact with the lower radial surface 2b to inhibit the oil flow beneath the lower side rail 4b into a gap between the piston 1 and cylinder 5.

During downward movement of the piston 1, the upper side rail 4a firmly retains contact with the upper radial surface 2a of the groove 2 to surely scrape oil from the inner surface of the cylinder 5. At this moment, the lower side rail 4b moves away from the lower radial surface 2b of the groove 2 due to the frictional force with the inner surface of the cylinder bore to provide a passage between the lower side rail 4b and lower radial surface 2b. Accordingly, the oil scraped by the lower side rail 4b flows through the opened passage between the lower side rail 4b and lower radial surface 2b into the groove 2, and then flows from the groove 2 through the opening (not shown) to the oil reservoir.

Generally, the frictional force produced between the side rails 4a, 4b and the inner wall of the cylinder 5 causes deformation of the side rails 4a, 4b. However, in the oil control ring according to the present invention, the protrusions 8 formed at predetermined angular intervals have the total circumferential length enough to prevent or control the deformation or vibration of the side rails 4a, 4b since a ratio of the total circumferential length of the protrusions 8 to the whole circumferential length of the side rail 4a, 4b is equal to or more than 20%, preferably equal to or more than 25%.

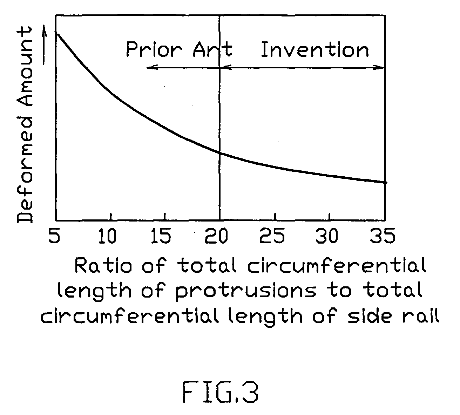

FIG.3 is a graph showing change in deformed amount of the side rails 4a, 4b relative to variation in ratio of the total circumferential length of the protrusions 8 to the whole circumferential length of the side rails 4a, 4b. FIG. 3 indicates a fact that prior art oil control rings tend to produce the vibration of the side rails 4a, 4b during the reciprocating motion of the piston 1 with the large deformation of the side rails because, in the prior art rings, the total circumferential length of the protrusions is less than 20% in a proportion of the whole circumferential length of the side rails. On the contrary, the oil control rings according to the present invention have the ratio of 20% or more of the total circumferential length of the protrusions 8 to the whole circumferential length of the side rails 4a, 4b. The longer protrusions 8 in the angular direction assure to reduce the deformation, warp and distortion of the side rails 4a, 4b and also reduce or prevent the vibration of the side rails 4a, 4b during the reciprocating motion of the piston 1. FIG. 3 shows the ratio less than 35%, however, a similar good effect for preventing the deformation and vibration of the side rails can be obtained even with the ratio of more than 35%. In a practical view, the ratio of the total circumferential length of the protrusions 8 preferably is less than 60%, more preferably less than 50%, still more desirably less than 40% of the whole circumferential length of the side rail 4a, 4b to provide the lugs 7 with the sufficient mechanical strength.

As mentioned above, because the total circumferential length of the protrusions of the expander is equal to or more than 20% of the whole circumferential length of the side rails, the present invention is very effective to reduce the deformation, warp and distortion of the side rails and to prevent the vibration of the side rails and the generation of abnormal noise from engine during the operation. In other words, the present invention can prevent the operative damage to the side rails and prolong service life of the side rails to attain the dynamic stability of the combined three piece oil ring and improve the engine performance.

## Claims

1. An oil control ring attachable in an annular groove (2) formed in a piston (1) for internal combustion engine, said oil control ring comprising an expander (6) and two side rails (4a, 4b) mounted thereon,
said expander (6) having the ring shape in the plan view with radial waves which include outer arcuate segments (6a), inner arcuate segments (6b), connections (6c) which connect the outer and inner arcuate segments (6a, 6b) and lugs (7) formed in said inner arcuate segments (6b) in contact with said side rails (4a, 4b) to elastically push said side rails (4a, 4b) toward an inner wall (13) of a cylinder (3);
each of said outer arcuate segments (6a) having upper and lower protrusions (8) for supporting each outer side of said side rails (4a, 4b), said upper protrusion (8) axially extending from the upper end of said outer arcuate segment (6a) for contact with said upper side rail (4a), said lower protrusion (8) axially extending from the lower end of said outer arcuate segment (6a) for contact with said lower side rail (4b);
a ratio of the total circumferential length of said protrusions (8) to the whole circumferential length of said side rail (4a, 4b) being equal to or more than 20%.

2. An oil control ring according to claim 1, wherein said side rail (4a, 4b) comprise an upper side rail (4a) and an lower side rail (4b) attached to said expander (6) in spaced and parallel relation to each other.

3. An oil control ring according to claim 1, wherein each end of said outer arcuate segments (6a) is alternately connected to each end of said inner arcuate segments (6b) adjacent to said outer arcuate segment (6a) through a connection (6c), said protrusion (8) is formed along the substantially entire length of said outer arcuate segment (6a) to extend to a bent portion (6d) formed between said outer arcuate segment (6a) and said connection (6c).

4. An oil control ring according to any one of claims 1 to 3, wherein said protrusion (8) has its circumferential length substantially equal to or longer than the circumferential length of said lug (7).

5. An oil control ring according to any one of claims 1 to 3, wherein a ratio of the total circumferential length of said protrusions (8) to the whole circumferential length of said side rail (4a, 4b) being equal to or more than 25%.

6. An oil control ring according to claim 1, wherein the spacer expander (3) and side rail (4a, 4b) are made of steel.

7. An oil control ring according to claim 1, wherein the ratio of the total circumferential length of the protrusions (8) is less than 60% of the whole circumferential length of said side rail (4a, 4b).
